# EUROPEAN PATENT SPECIFICATION

(11) **EP 0 671 223 B1**
(45) Date of publication and mention of the grant of the patent: **08.08.2001**
(21) Application number: 94870045.5
(22) Date of filing: 11.03.1994
(51) Int. Cl.: B09B 3/00, C02F 11/00, C02F 1/62

(54) **Process for the treatment of contaminated sediments**
Verfahren zur Behandlung von kontaminierten Sedimenten
Procédé pour le traitement de sédiments contaminés

(43) Date of publication of application: 13.09.1995
(73) Proprietor: DEC N.V., 2070 Zwijndrecht (BE)
(72) Inventor: De Brabandere, Jef, B-8000 Brugge (BE); Poppe, Dirk, B-9280 Denderbelle (BE)
(74) Representative: Quintelier, Claude

(56) References cited:
- EP-A- 0 493 357
- WO-A-93/06952
- DE-A- 4 117 515
- DE-C- 4 024 769
- NL-A- 8 600 709
- DATABASE WPI Week 7824, Derwent Publications Ltd., London, GB; AN 78-42742A & JP-A-53 048 871 (CHIYODA CHEM. ENG.) 2 May 1978

## Description

The present invention relates to a process for the treatment of contaminated sediments such as dredged materials or soils containing at least inorganic contaminants, in which process the sediment is subjected to an extraction step in an aqueous medium under low pH conditions achieved by the use of an inorganic strong acid.

Such a process is for example disclosed in EP-A-0 493 357. In this known process, the extraction is performed at a pH lower than 2 and preferably at a pH of between 0,5 and 1 in order to permit an extraction of most of the inorganic contaminants, i.e. heavy metals. For removing hydrocarbons from the sediments, EP-A-0 493 357 proposes to use oxidants to oxidize these hydrocarbons.

An important drawback of this known treatment process consists in that the extremely low pH conditions during the extraction have a disastrous effect on the quality of the treated sediments, more particularly as to their structure and the micro-biological life. In this respect, practice has shown that it is very difficult to restart plant-growth on the treated sediments, even after having neutralized these sediments.

In order to improve the extraction efficiency, it has further already been proposed to use chemical complexing or sequestering agents such as NTA and EDTA. However, these complexantia are first of all not effective under the above described low pH conditions and constitute an additional contamination of the treated sediments, as moreover those chemicals show almost no biodegradation.

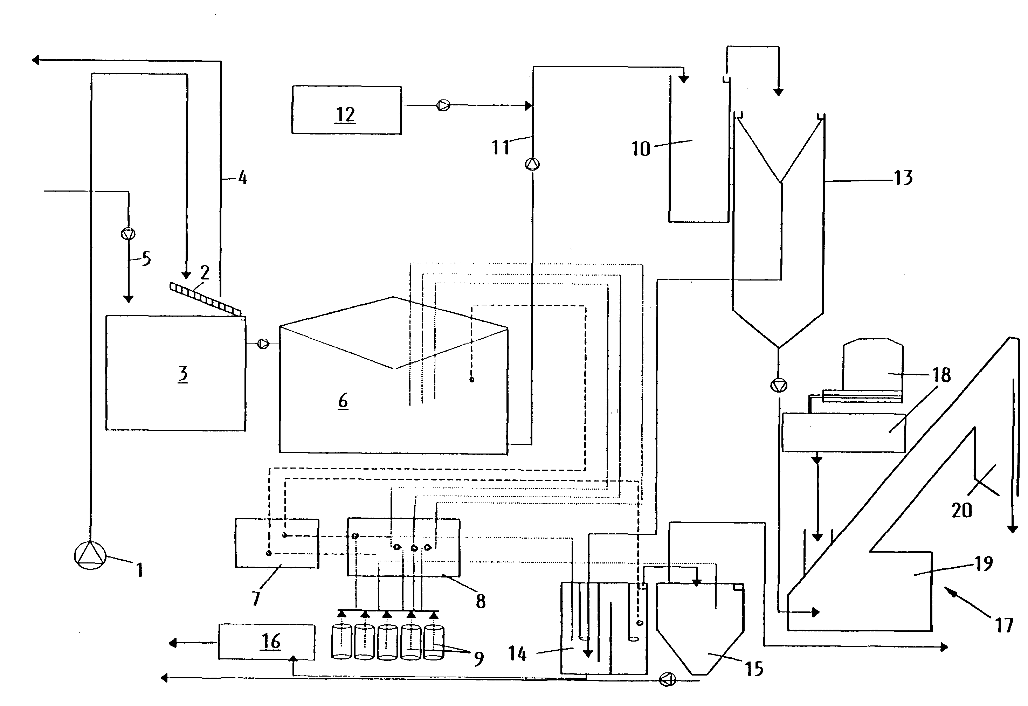

In DE-A-41 17 515 an acid extraction of sediments with a combination of an inorganic acid and an organic acid, in particular acetic acid or lactic acid, is disclosed. The pH at which the extraction is performed is not mentioned but, in the examples, use is made of a 10-30 % by weight HNO₃ or H₂SO₄ solution so that also in DE-A-41 17 515 the extraction is performed at low pH values notwithstanding the fact that in addition to the strong inorganic acid an organic acid may be used. The same goes for WO93/06956 which discloses in Figure 3 an extraction with 0.1 M HCI in combination with 1% or 2% acetic acid or with 2% oxalic acid. This extraction is thus performed at a pH of 1. On p. 12, I. 24-27, WO93/06956 gives the range of 0.01-1 M for the amount of the strong acid such as HCI and the more preferred range of 0.05-1 M corresponding respectively to a pH range of 2-0 and a pH range of 1.3-0.3.

An object of the present invention consists now in providing a new process allowing to achieve a sufficient extraction efficiency whilst reducing the disastrous effect of the acid extraction on the quality of the treated sediment, more particularly on its structure and on the micro-biological life therein and whilst limiting the extraction of iron.

To this end, the process according to the invention is characterized in that it comprises the steps as defined in claim 1.

In order to enhance the extraction efficiency in the process_according to the invention, the aqueous medium is first of all aerated and/or a chemical oxidant is added thereto. In this way, the oxidizable fraction of the sediment consisting mainly of the organic and sulphide fraction can be sufficiently oxidized. These latter two fractions are part of the exchangeable fraction of the sediment so that the extraction of the inorganic contaminants is clearly enhanced in this way. More particularly, it was found that the acid extraction step and the oxidizing step do not have a cummulative but a synergetic effect on the extraction efficiency.

In order to further enhance the extraction efficiency in the process according to the invention, at least one low molecular organic acid or salt thereof effective for forming complexes under said low pH conditions with said inorganic contaminants is also added to said aqueous medium, in particular citric acid. It has been found that citric acid is very effective for increasing the extraction efficiency of heavy metals but allows nevertheless to keep more iron in the sediment.

The complexing or sequestering effect of the low molecular organic acids is especially important in the micro-cavities of the sediment wherein the prevailing conditions immediately result in a reabsorption of the released cations. Indeed, these so-called shifts are obviated by complexation of the cations in the aqueous phase. Compared to the proposed complexing agents such as NTA and EDTA, the citric acid and possible other low molecular organic acids used in the process according to the present invention provide an increased competitivity localised at the highly selective sites to which the heavy metals are bound. The used organic acids used optionally in addition to the citric acid have preferably a molecular weight lower than 225 and in particular even lower than 200.

Experimentally, such low molecular acids, different from tertiary amine organic acids, and preferably also from secondary amine organic acids, were found to be especially appropriate.

According to the invention, the process comprises further a microbiological treatment of the sediment for decomposing organic contaminants present in this sediment, the microbiological treatment being in particular performed after said extraction step.

This microbiological treatment is first of all intended to obtain a breakdown of organic contaminants, especially PAH's, which may be present in the sediment. However, the microbiological treatment is also very important for the inorganic contaminants. Indeed, during this treatment the portion of low molecular organic acids remaining in the sediment are decomposed (i.e. used as a C-source to the microorganisms) resulting in an immobilization of the rest fraction of inorganic contaminants in the extracted sediment. In case of an oxidizing step, an important further immobilization is achieved by a biological reduction of the sediment. More particularly sulphides are formed again immobilizing heavy metals which may still be present in the treated sediment. When iron is present in the treated sediment, a permanent immobilization of heavy metals on iron sulphides can further be achieved.

Further particularities and advantages of the invention will become apparent from the following description of a particular embodiment of the process according to the present invention. The reference numerals relate to the drawings wherein the single figure shows a diagrammatic representation of a possible installation for carrying out a process according to the present invention.

In the process according to the present invention, contaminated sediments such as dredged materials or soils, having in particular a fine texture and containing usually both organic and inorganic contaminants are subjected to an extraction step in an aqueous medium at low pH conditions.

In the embodiment shown in the single figure, the contaminated sediments are fed from a feed 1, preferably over a sieve 2, into a pretreatment or buffertank 3. The resulting debris are removed through line 4. In the pretreatment tank 3, the contaminated sediments are mixed with water supplied through a water supply duct 5. This water, which may be recycled from the process, is added until a dry matter content of 5-20 % by weight is reached, preferably a dry matter content of about 10 % by weight. The water-sediment mixture is then pumped from the pretreatment tank 3 to a central reactor 6.

In this central reactor 6 the pH is adjusted to a low pH value at which an acid extraction can be obtained. This is done by adding a strong inorganic acid such as HCI, HNO₃, H₂SO₄, or a combination thereof until a predetermined pH value is reached more particularly until a protonation of the sediment effective for the extraction step is achieved. The pH as well as other parameters of the aqueous mixture or slurry in the central reactor 6 is controlled by a process control device 7. This device 7 controls a dosage unit 8 for dosing i.a. said inorganic acid into the central reactor, more particularly from chemical supply tanks 9.

Depending on the sediments and the contamination, the extraction will be performed at a pH of from 2 to 4 and usually at about pH 2. In this way, the indigenous microbiological population present in the contaminated sediment may still survive the physico-chemical treatment.

In order to obtain a sufficient extraction efficiency at these less extreme pH values, the present invention proposes to add at least one low molecular organic acid, including at least citric acid, or the related salts derived therefrom effective for forming complexes under the low pH extraction conditions with the inorganic contaminants.

When use is made of recycled aqueous medium, the medium may already contain such low molecular acids. Additional organic acid or salts thereof may be supplied by the dosage unit 8 under control of the process control device 7.

Amongst the low molecular acids, tertiary amine organic acids, and preferably also secondary amine organic acids are in particular excluded for use in the process according to the invention. Examples of such tertiary amine organic acids are NTA and EDTA which are well known complexing agents but which are not active at low pH conditions. Further, they are not or difficult to eliminate afterwards.

In the process according to the invention, use is on the contrary preferably made of organic acids or salts thereof which are biologically convertible. These organic acids may for example be selected from the group comprising the following acids or salts thereof: citric acid, acetic acid, maleic acid, salicylic acid, lactic acid, aspartic acid, oxalic acid, vanillic acid, gallic acid, tannic acid, syringic acid, propionic acid and tartaric acid.

According to the invention it was found that these organic acids permit to obtain a higher extraction efficiency for heavy metals, either alone or in different mutual combination. Depending on the amount and kinds of heavy metals present in the contaminated sediment, the most appropriate selection or combination of these organic acids can be made in advance experimentally on a laboratory scale.

Amongst the above indicated low molecular organic acids, citric acid or the corresponding citrates, appeared to be very effective. In the process according to the invention, citric acid is therefore added either alone or in combination with other organic acids. An advantage of citric acid is that it enhances the extraction of heavy metals but not or to a far less extend of iron. As explained hereinafter, this iron may be important for obtaining an immobilization of remaining heavy metals in the treated sediment. Usually, the low molecular organic acid or acids will be added until a concentration of 0.1 to 5 % by weight is achieved, preferably until a concentration of 0.2 to 3 % by weight and in particular of about 0.5 to 1 % by weight is achieved. Citric acid is preferably used in a concentration of about 0.5 % by weight.

A considerable increase of the extraction efficiency of inorganic contaminants is obtained according to the present invention by the combination of an acid extraction with an oxidizing step. In this way, a sufficient extraction efficiency can also be obtained at less extreme pH values. In fact, a synergetic effect was found to exist between the acid extraction and oxidation step. Due to the oxidation step, organic matter and especially sulphides in the sediment will be oxidized resulting in a considerably increased extraction of heavy metals at least at low pH extraction conditions.

In the embodiment shown in the figure, the oxidizing step is performed by aerating the aqueous mixture or slurry in the central reactor 6. In case the extraction efficiency should still be increased further, an oxidizing agent, such as H₂O₂, is added by the dosage unit 8 under control of the process control device 7. This control can be achieved by measuring the redox potential of the slurry in the central reactor 6. Other peroxides can be used as well.

After the extraction, the slurry is pumped from the central reactor 6 into a washing unit 10. In the supply pipe 11 to this washing unit 10, conditioning agents are admixed to the slurry by a conditioning unit 12. These conditioning agents comprise alkaline substances, for example calcium carbonate, increasing not only the pH of the slurry but having further a positive effect on the structure of the treated sediment.

After the washing step, the slurry is pumped into a solid-fluid separation tank 13. In this tank 13 the slurry is dewatered, use being made for example of polyelectrolytes to flocculate the sediment.

The removed liquid phase is further treated in a waste water treatment installation. In the example shown in the figure, the water treatment installation comprises two reactors 14, 15.

In the first reactor 14 the acid water loaded with the extracted heavy metals is neutralized, for example with a CaCO₃ containing substance. This first neutralization is a rude one in which iron is mainly precipitated. In the second reactor the pH is brought up to 7.5 to 9, preferably to about pH 8 by means of a strong inorganic base, in particular NaOH. The solution is thoroughly mixed and at the same time Na₂S is added to create insoluble metalsulphide compounds. This last step can in some cases be reduced to the addition of Na₂S alone, depending on the water characteristics. In this case, Na₂S acts both as an alkaline agent and as precipitator.

The precipitate of the first reactor 14 can be removed after a further neutralization in neutralization unit 16 while the precipitate of the second reactor 15 can be removed as such. The purified water can be reused as aqueous medium for preparing the slurry in the pretreatment tank 3.

In addition to the physico-chemical extraction step, the process according to the invention comprises further a microbiological treatment of the sediment for decomposing organic contaminants, such as PAH's (polyaromatic hydrocarbons), mineral oils, etc., present in the sediment.

In the microbiological treatment installation 17 shown in the figure, a microbial blend is admixed by means of a dosing unit 18 to the extracted sediment, for example when this sediment is conveyed through an Archimedian screw. Preferably, the sediment is further neutralized prior to the microbiological treatment, preferably by admixing a calcium rich alkaline compound, such as calcium carbonate, thereto. This has not been shown in the figure but could also be performed in an Archimedian screw. The use of a calcium rich alkaline compound further improves the structure of the sediment.

The microbiological treatment installation 17 comprises in a particular embodiment a controlled bioreactor 19 wherein the largest amounts of organic contaminants are broken down. Through an intensive aeration and the measurement of nutrients and solvents the major part of the organic degradable contaminants are attacked. In order to stimulate the micro-organisms, it was found very effective to admix organic matter, in particular compost to the sediment prior to the microbiological treatment.

After being treated in the bioreactor 19, the sediments are stored in a landfarm 20, where a maturation takes place for a couple of weeks to a couple of months. During this period, the sediments are being tilled periodically, based on the initial organic concentration and the final level of contamination to achieve.

As explained hereinabove, the microbiological treatment is not only important for decomposing the organic contaminants, but also for immobilizing possibly remaining rest fractions of heavy metals in the treated sediments. This immobilization is achieved by decomposing the added low molecular organic acids and/or by reducing the sediments, more particularly by reconverting the sulfates again into sulphides in case the sediments have been oxidized. In this case, the presence of iron in the treated sediments is important for achieving a permanent immobilization of heavy metals on iron sulphides. Indeed, when this ironsulphide-heavy metal complex is possibly brought again later under aerobic conditions, an oxide layer will be formed on the surface thereof providing an occlusion of the heavy metals. Within these occlusions, the residual heavy metals are permanently immobilized and are no longer available for biological processes. This part of the process is therefore called the bio-occlusion concept.

The combination of an oxidation and the acid extraction with a microbiological treatment has further as advantage that the contaminants are made more reactive by the oxidation and under the acid conditions to establish a microbial breakdown. To this end also chemical inducers, which are forming free radicals such as H₂O₂, may be used to serve this purpose, for example in view of the final maximum rest concentration of contaminants to be achieved.

## Claims

1. A process for the treatment of contaminated sediments such as dredged materials or soils containing at least inorganic contaminants and iron, in which process the sediment is subjected to an extraction step in an aqueous medium under low pH conditions achieved by the use of an inorganic strong acid, characterized in that it comprises the steps of:
- mixing the contaminated sediment into the aqueous medium;
- adding at least one low molecular organic acid, including at least citric acid, or salt thereof effective for forming complexes under said low pH conditions with said inorganic contaminants to said aqueous medium;
- aerating said aqueous medium and/or adding a chemical oxidant thereto;
- extracting the inorganic contaminants out of the contaminated sediment into the liquid phase at a pH value of from 2 to 4
- separating the liquid from the solid phase; and
- subjecting the solid phase to a microbiological treatment controlled to cause the break-down of organic contaminants under aeration and to cause the sediment to be reduced after this treatment so as to cause the formation of sulphide-sinks, including iron sulphide-sinks, on which remaining inorganic contaminants, especially heavy metals, from the sediment are being adsorbed.

2. A process according to claim 1, characterized in that tertiary amine organic acids, and preferably also secondary amine organic acids are excluded for use as said low molecular organic acid.

3. A process according to claim 1 or 2, characterized in that said organic acid or salt thereof is biologically convertible and is more particularly selected from the group comprising the following acids or salts thereof: citric acid, acetic acid, maleic acid, salicylic acid, lactic acid, aspartic acid, oxalic acid, vanillic acid, gallic acid, tannic acid, syringic acid, propionic acid and tartaric acid.

4. A process according to any one of the claims 1 to 3, characterized in that said low molecular organic acid is added to said aqueous medium until a concentration of 0.1 to 5 % by weight is achieved, preferably until a concentration of 0.2 to 3% and in particular of about 0.5 to 1 % is achieved.

5. A process according to any one of the claims 1 to 4, characterized in that organic matter, in particular compost, is admixed to the sediment before said microbiological treatment.

6. A process according to any one of the claims 1 to 5, characterized in that the sediment is neutralized before said microbiological treatment, preferably by admixing a calcium rich alkaline compound to said sediment.

7. A process according to any one of the claims 1 to 6, characterized in that said extraction step is followed by a washing step wherein the sediments separated from said aqueous medium are washed with a liquid, in particular with water.

## Patentansprüche

1. Verfahren zur Behandlung von kontaminierten Sedimenten, wie ausgebaggerten Materialien oder Böden bzw. Erdreich, enthaltend wenigstens anorganische Verunreinigungen und Eisen, in welchem Verfahren das Sediment einem Extraktionsschritt in einem wäßrigen Medium unter niedrigen pH-Bedingungen unterworfen wird, die durch die Verwendung einer starken, anorganischen Säure erreicht werden, dadurch gekennzeichnet, daß es die Schritte umfaßt:
- Mischen des kontaminierten Sediments in das wäßrige Medium;
- Zusetzen von wenigstens einer niedrigmolekularen, organischen Säure, enthaltend wenigstens Zitronensäure, oder ein Salz davon, welche(s) wirksam ist, Komplexe unter diesen niedrigen pH-Bedingungen mit den anorganischen Verunreinigungen auszubilden, in das wäßrige Medium;
- Belüften des wäßrigen Mediums und/oder Zusetzen eines chemischen Oxidationsmittels;
- Extrahieren der anorganischen Verunreinigungen aus dem kontaminierten Sediment in die flüssige Phase bei einem pH-Wert von 2 bis 4;
- Abtrennen der Flüssigkeit von der festen Phase; und
- Unterwerfen der festen Phase einer mikrobiologischen Behandlung, welche gesteuert ist, um das Aufbrechen der organischen Verunreinigungen unter Belüftung zu bewirken und um das Sediment zu veranlassen, daß es nach dieser Behandlung reduziert wird, um die Bildung von Sulfidsümpfen bzw. Ablagerungen, umfassend Eisensulfid-Ablagerungen, zu bewirken, auf welchen verbleibende, anorganische Verunreinigungen, insbesondere Schwermetalle, aus dem Sediment adsorbiert werden.

2. Verfahren nach Anspruch 1, dadurch gekennzeichnet, daß organische tert.-Aminsäuren und vorzugsweise auch organische sek.-Aminsäuren zur Verwendung als die niedrigmolekulare, organische Säure ausgeschlossen sind.

3. Verfahren nach Anspruch 1 oder 2, dadurch gekennzeichnet, daß die organische Säure oder das Salz davon biologisch umwandelbar ist und daß es insbesondere aus der Gruppe gewählt ist, umfassend die folgenden Säuren oder Salze davon: Zitronensäure, Essigsäure, Maleinsäure, Salicylsäure, Milchsäure, Asparginsäure, Oxalsäure, Vanillinsäure, Gallsäure, Tanninsäure, Syringasäure, Propionsäure und Weinsäure.

4. Verfahren nach einem der Ansprüche 1 bis 3, dadurch gekennzeichnet, daß die niedrigmolekulare, organische Säure zu dem wäßrigen Medium zugesetzt wird, bis eine Konzentration von 0,1 bis 5 Gew.-% erreicht ist, vorzugsweise bis eine Konzentration von 0,2 bis 3 % und insbesondere von etwa 0,5 bis 1 % erreicht ist.

5. Verfahren nach einem der Ansprüche 1 bis 4, dadurch gekennzeichnet, daß organisches Material, insbesondere Kompost, dem Sediment vor der mikrobiologischen Behandlung zugemischt wird.

6. Verfahren nach einem der Ansprüche 1 bis 5, dadurch gekennzeichnet, daß das Sediment vor der mikrobiologischen Behandlung vorzugsweise durch Zumischen einer kalziumreichen, alkalischen Verbindung zu dem Sediment neutralisiert wird.

7. Verfahren nach einem der Ansprüche 1 bis 6, dadurch gekennzeichnet, daß der Extraktionsschritt von einem Waschschritt gefolgt wird, worin die von dem wäßrigen Medium abgetrennten Sedimente mit einer Flüssigkeit, insbesondere Wasser, gewaschen werden.

## Revendications

1. Procédé pour le traitement de sédiments contaminés tels que matières draguées ou sols contenant au moins des contaminants inorganiques et du fer, procédé dans lequel le sédiment est soumis à une étape d'extraction dans un milieu aqueux sous des conditions de faible pH réalisées par l'utilisation d'un acide fort inorganique, caractérisé en ce qu'il comprend les étapes suivantes :
- le mélange du sédiment contaminé dans le milieu aqueux;
- l'addition d'au moins un acide organique de bas poids moléculaire, comprenant au moins de l'acide citrique ou un sel de celui-ci efficace pour former des complexes sous les conditions de faible pH susdites avec lesdits contaminants inorganiques audit milieu aqueux;
- l'aération de ce milieu aqueux et/ou l'addition d'un oxydant chimique à celui-ci;
- l'extraction des contaminants inorganiques du sédiment contaminé dans la phase liquide à une valeur de pH de 2 à 4;
- la séparation du liquide de la phase solide; et
- le traitement de la phase solide en la soumettant à un traitement microbiologique contrôlé pour provoquer la rupture des contaminants organiques sous aération et pour amener le sédiment à être réduit après ce traitement de manière à provoquer la formation d'enclaves de sulfure, notamment des enclaves de sulfure de fer, sur lesquelles les contaminants inorganiques restants, en particulier des métaux lourds, du sédiment sont adsorbés.

2. Procédé suivant la revendication 1, caractérisé en ce que les acides organiques d'amine tertiaire, et avantageusement également les acides organiques d'amine secondaire, sont exclus d'utilisation comme acide organique de bas poids moléculaire précité.

3. Procédé suivant l'une ou l'autre des revendications 1 et 2, caractérisé en ce que l'acide organique ou le sel de celui-ci est biologiquement convertible et est plus particulièrement choisi dans le groupe comprenant les acides suivants ou leurs sels : acide citrique, acide acétique, acide maléique, acide salicylique, acide lactique, acide aspartique, acide oxalique, acide vanillique, acide gallique, acide tannique, acide syringique, acide propionique et acide tartrique.

4. Procédé suivant l'une quelconque des revendications 1 à 3, caractérisé en ce que l'acide organique de bas poids moléculaire précité est ajouté au milieu aqueux jusqu'à l'obtention d'une concentration de 0,1 à 5% en poids, avantageusement jusqu'à l'obtention d'une concentration de 0,2 à 3% et en particulier d'environ 0,5 à 1%.

5. Procédé suivant l'une quelconque des revendications 1 à 4, caractérisé en ce que de la matière organique, en particulier du compost, est mélangée au sédiment avant le traitement microbiologique précité.

6. Procédé suivant l'une quelconque des revendications 1 à 5, caractérisé en ce que le sédiment est neutralisé avant le traitement microbiologique précité, avantageusement en mélangeant un composé alcalin riche en calcium audit sédiment.

7. Procédé suivant l'une quelconque des revendications 1 à 6, caractérisé en ce que l'étape d'extraction précitée est suivie d'une étape de lavage dans laquelle les sédiments séparés du milieu aqueux sont lavés avec un liquide, en particulier avec de l'eau.
